(19) Europäisches Patentamt
European Patent Office
Office européen des brevets

(11) **EP 4 209 896 B1**

(12) **EUROPEAN PATENT SPECIFICATION**

(45) Date of publication and mention
of the grant of the patent:
**24.06.2026 Bulletin 2026/26**

(21) Application number: **21874220.3**

(22) Date of filing: **13.09.2021**

(51) International Patent Classification (IPC):
*G06F 8/53* *(2018.01)*        *G06F 8/76* *(2018.01)*

(52) Cooperative Patent Classification (CPC):
**G06F 8/53; G06F 8/76**

(86) International application number:
**PCT/CN2021/117889**

(87) International publication number:
**WO 2022/068559 (07.04.2022 Gazette 2022/14)**

(54) **CODE PROCESSING METHOD AND APPARATUS, AND DEVICE**

CODEVERARBEITUNGSVERFAHREN UND -VORRICHTUNG SOWIE VORRICHTUNG

PROCÉDÉ ET APPAREIL DE TRAITEMENT DE CODE ET DISPOSITIF

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.09.2020 CN 202011063134**

(43) Date of publication of application:
**12.07.2023 Bulletin 2023/28**

(73) Proprietor: **Huawei Technologies Co., Ltd.**
**Shenzhen, Guangdong 518129 (CN)**

(72) Inventors:
• **LYU, Zhihong**
  **Shenzhen, Guangdong 518129 (CN)**
• **BAO, Peng**
  **Shenzhen, Guangdong 518129 (CN)**
• **LE, Yongnian**
  **Shenzhen, Guangdong 518129 (CN)**
• **WU, Weinan**
  **Shenzhen, Guangdong 518129 (CN)**

(74) Representative: **Maiwald GmbH**
**Engineering**
**Elisenhof**
**Elisenstrasse 3**
**80335 München (DE)**

(56) References cited:
WO-A1-2020/177994    CN-A- 1 818 863
CN-A- 108 920 133    CN-A- 110 457 046
CN-A- 110 765 027    CN-A- 111 708 539
US-A- 5 278 961    US-A1- 2019 227 779

## Description

### TECHNICAL FIELD

This application relates to the field of application development technologies, and in particular, to a code processing method and a corresponding apparatus.

### BACKGROUND

US2019/227779A1 describes a method for executing a program compiled for a source architecture on a machine having a different target architecture, a non-transitory computer readable medium configured to store instructions for performing such a method, and a system for performing such a method.

During application development, a developer may develop an application by referring to an existing application, to improve development efficiency. Specifically, the developer may restore compiled program code to source code through decompilation (decompilation), and then analyze the source code, to provide help for application development. The compiled program code is generally code in a low-level programming language, for example, may be code in a machine language (also referred to as machine code). The source code is generally code in a high-level programming language, for example, may be code in a C language or code in a Java language. In some cases, the source code may also be code in an assembly language.

An existing decompilation technology can support code conversion between different programming languages on a same platform. For example, an existing decompiler may convert code in a machine language of an x86 platform into code in an assembly language of the x86 platform. However, in many scenarios, code of some platforms also needs to be migrated to another platform, so that the application can be migrated to another platform.

Based on this, a cross-platform code conversion method needs to be provided urgently in the industry, to improve efficiency of application development and migration.

### SUMMARY

The invention and its scope of protection is defined by the appended independent claims. Embodiments of the invention are defined by the appended dependent claims.

### BRIEF DESCRIPTION OF DRAWINGS

To describe the technical methods in embodiments of this application more clearly, the following briefly describes the accompanying drawings used in describing the embodiments.

FIG. 1 is a diagram of a system architecture of a code processing method according to an embodiment of this application;

FIG. 2 is a diagram of another system architecture of a code processing method according to an embodiment of this application;

FIG. 3 is a flowchart of a code processing method according to an embodiment of this application;

FIG. 4 is a schematic diagram of receiving first code by using a graphic user interface (GUI) according to an embodiment of this application;

FIG. 5 is a schematic diagram of adjusting parameters of functions according to an embodiment of this application;

FIG. 6 is a schematic flowchart of a code processing method according to an embodiment of this application;

FIG. 7 is a schematic diagram of a structure of a code processing apparatus according to an embodiment of this application; and

FIG. 8 is a schematic diagram of a structure of a computing apparatus according to an embodiment of this application.

### DESCRIPTION OF EMBODIMENTS

The terms "first" and "second" in the embodiments of this application are merely intended for a purpose of description, and shall not be understood as an indication or implication of relative importance or implicit indication of a quantity of indicated technical features. Therefore, a feature limited by "first" or "second" may explicitly or implicitly include one or more features.

Some technical terms used in the embodiments of this application are first described.

A programming language (programming language) is a formal language used to define a computer program. Therefore, the programming language is also referred to as a computer language. A developer specifically implements application development by writing a code file by using the foregoing programming language.

The programming language can be classified into a low-level programming language and a high-level programming language based on whether a language is machine-oriented. A machine-oriented (for example, computer-oriented) programming language is a low-level programming language. The low-level programming language includes a machine language and an assembly language.

The machine language is a language represented by binary code. The machine language is the only language that can be recognized and executed by a computer. The assembly language is a language that uses names and symbols that are easy to understand and memorize to represent operation code in a machine instruction, to solve a shortcoming of the machine language that is difficult to understand and memorize. The assembly language replaces binary code of the machine language with symbols. Therefore, the assembly language is essentially a symbol language.

It should be noted that a code file written in the assembly language generally cannot be directly recognized by a machine (such as a computer). For this purpose, a developer can further translate the assembly language into the machine language by using an assembly program, to facilitate recognition and execution by a machine. Therefore, compared with the machine language, the assembly language is a high-level programming language.

A programming language other than a machine-oriented programming language is a high-level programming language. The high-level programming language is a language independent of a machine. In other words, the high-level programming language may be generally applied to different types of machines, for example, a machine applied to an x86 instruction set architecture, or a machine applied to an advanced reduced instruction set machine (advanced RISC machines, ARM) architecture. The high-level programming language is less dependent on a machine.

The high-level programming language is generally close to a natural language, and may use a mathematical expression. Therefore, the high-level programming language has a stronger expression capability, can conveniently represent a data operation and a control structure of a program, and can better describe various algorithms. The high-level programming language includes different languages such as java, c, c++, C#, pascal, and python. Similar to the assembly language, the high-level programming language cannot be directly recognized and executed by a machine. A developer may compile, by using a compilation program such as a compiler, a code file written based on a high-level programming language, so that the code file can be recognized and executed by a machine.

During application development, a developer may develop applications by referring to existing applications, to improve development efficiency. Specifically, the developer may restore the compiled program code through decompilation (decompilation), and then analyze the code obtained after the restoration to provide help for application development.

The compiled program code is generally code in a low-level programming language, for example, code in a machine language (also referred to as machine code). The code obtained after the restoration is generally code in a high-level programming language, for example, code in a C language or code in a Java language. In some cases, the code obtained after the restoration may alternatively be code in an assembly language.

Existing decompilation technologies can support code conversion between different programming languages on the same platform. For example, an existing decompiler may convert code in a machine language of an x86 platform into code in an assembly language of the x86 platform. However, in many scenarios, code of some platforms also needs to be migrated to other platforms, so that the application can be migrated to other platforms.

A platform corresponding to the code to be migrated is referred to as a source platform, and a platform corresponding to the code obtained through migration is referred to as a target platform. The source platform and the target platform are specifically different platforms. Different platforms refer to platforms with different instruction sets. The platforms with different instruction sets may be platforms with different instruction sets of a same type, for example, Pentium II and Pentium III (in which a new SSE instruction set is introduced) on an x86 platform, or ARM V8 and ARM V9 on an ARM platform. The platforms with different instruction sets may alternatively be platforms of different types, for example, any platform on the x86 platform and any platform on the ARM platform. The code of the source platform may be specifically code obtained through compilation, and may be, for example, code in an object (object, obj) file.

However, although the code in the obj file is binary code, the obj file is not a complete executable file. Definitions and access addresses of variables in the obj file are uncertain, which causes a logic error in generated pseudocode. As a result, when the decompiler directly performs decompilation on the code of the obj file, accuracy is low and reliability is low.

In view of this, an embodiment of this application provides a code processing method. The method may be executed by a decompiler. The decompiler may be a software module, and provides a code decompilation service by running on a hardware device such as a computer. In some possible implementations, the decompiler may alternatively be a hardware module having a code decompilation function.

Specifically, the decompiler obtains first code. The first code is code that is obtained through compilation and that is applicable to a source platform, for example, code in an obj file on the x86 platform. Then, the decompiler relocates addresses of variables associated with functions in the first code, to obtain logical addresses of the variables. A logical address is also referred to as a program address, and is generally an address allocated by a developer during code writing. The logical address may be translated or mapped to a physical address for ease of addressing.

Definitions of the variables may be generated based on the logical addresses of the variables. In this way, the definitions and the access addresses of the variables in the first code may be determined, and a complete executable file may be obtained. The decompiler performs decompilation based on the logical addresses of the variables and the first code, which is equivalent to decompiling the complete executable file, to obtain a second code applicable to a target platform.

According to the method, cross-platform decompilation is implemented, and efficiency of application development or migration is improved. In addition, addresses of variables associated with functions in first code are relocated, and the addresses obtained after the relocation may be used to generate definitions of the variables, to resolve a logic error in generated pseudocode caused due to uncertain definitions and access addresses of the variables. This improves accuracy and reliability of decompilation.

It should be noted that the decompiler provided in the embodiments of this application may be provided for a user in a form of a software package. Specifically, an owner of the decompiler may release a software package of the decompiler. A user obtains the software package, and then runs the software package, to implement cross-platform decompilation on the first code applicable to the source platform. In some possible implementations, the decompiler provided in the embodiments of this application may be provided for a user in a form of a cloud service. The user may upload the first code applicable to the source platform to a cloud, and decompilation may be performed on the code by using a decompilation service in the cloud. Then, the second code applicable to the target platform is returned to the user.

To make the technical solutions of this application clearer and easier to understand, a deployment manner of a decompiler is described below in detail with reference to the accompanying drawings.

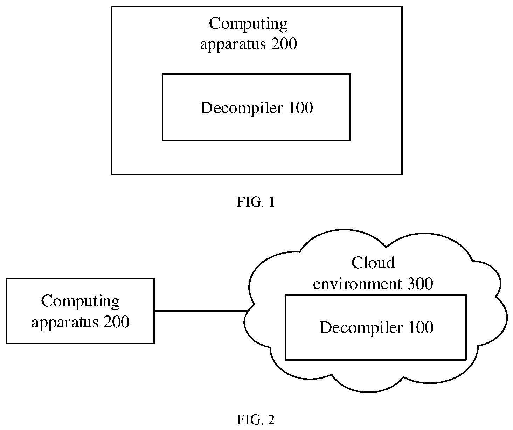

FIG. 1 is a diagram of a system architecture of a code processing method. A decompiler 100 may be deployed on a computing apparatus 200. The computing apparatus 200 includes, but is not limited to, a device such as a desktop computer or a notebook computer. The decompiler 100 is configured to perform decompilation on code. The decompiler 100 may be independent, or may be integrated with another development tool. For example, the decompiler 100 may be integrated with an editor, a compiler, a debugger, or the like, to form an integrated development environment (integrated development environment, IDE).

The decompiler 100 running on the computing apparatus 200 may obtain first code. The first code is code that is obtained through compilation and that is applicable to a source platform, for example, binary code in an obj file applicable to an x86 platform. Then, the decompiler 100 relocates addresses of variables associated with functions in the first code, and then performs decompilation based on the addresses of the variables obtained after the relocation and the first code, to obtain second code applicable to a target platform. In this way, cross-platform decompilation is implemented on the first code locally (for example, in the local computing apparatus 200).

Then, FIG. 2 is a diagram of a system architecture of a code processing method. The decompiler 100 is deployed in a cloud environment 300. A user accesses the decompiler 100 in the cloud environment 300 by using the computing apparatus 200, to implement cross-platform decompilation of the first code.

The cloud environment 300 indicates a cloud computing cluster that is owned by a cloud service provider and that is used to provide computing, storage, and communication resources. The cloud computing cluster may be classified into a central cloud and an edge cloud based on a location of the cloud computing cluster in a network topology. The cloud computing cluster includes at least one cloud computing device, for example, at least one central server, or at least one edge server.

The computing apparatus 200 may submit first code to the decompiler 100 running in the cloud environment 300. The decompiler 100 obtains the first code, and may relocate addresses of variables associated with functions in the first code. Then, the decompiler 100 performs decompilation on the addresses of the variables obtained after the relocation and the first code, to obtain second code applicable to a target platform. Further, the decompiler 100 in the cloud environment 300 may return the second code to the computing apparatus 200. In this way, cross-platform decompilation of code is implemented on the cloud. Because a decompilation process is mainly performed in a cloud, and the computing apparatus 200 mainly assists in decompilation, a requirement on performance of the computing apparatus 200 is low, which has high availability.

FIG. 1 and FIG. 2 merely describe examples of some deployment manners of the decompiler 100. In another possible implementation of the embodiments of this application, the decompiler 100 may alternatively be deployed in another manner. This is not limited in the embodiments of this application.

With reference to the accompanying drawings, the code processing method provided in the embodiments of this application is described below in detail from a perspective of the decompiler 100.

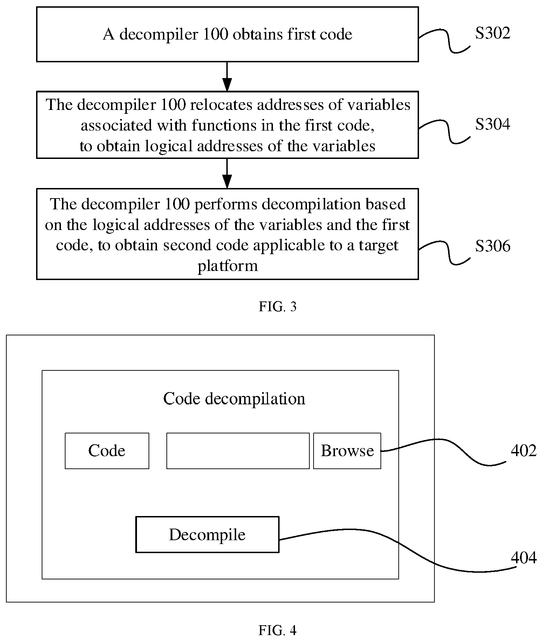

FIG. 3 is a flowchart of a code processing method. The method includes the following steps.

S302: The decompiler 100 obtains first code, which is a feature according to the claimed invention.

The first code is code that is obtained through compilation and that is applicable to a source platform, which is a feature according to the claimed invention. The source platform may be any one of platforms such as an x86 platform and an ARM platform. The code obtained through compilation is code obtained by the compiler by compiling source code. The code is specifically binary code. In some embodiments, the first code may be code in an obj file. In some other embodiments, the first code may alternatively be mixed code. The mixed code is specifically mixed with code in an obj file.

In some possible implementations, the decompiler 100 may receive, by using a user interface such as a graphical user interface (graphical user interface, GUI) or a command user interface (command user interface, CUI), the first code entered by a user.

For ease of understanding, a specific example is used for description below. FIG. 4 is a schematic diagram in which the decompiler 100 obtains the first code by using a GUI. As shown in FIG. 4, the GUI provided by the decompiler 100 carries a code input control 402 and a code decompilation control 404. A user may enter first code by using the code input control 402. Specifically, the user may enter a storage path of the first code by using the code input control 402. In this way, the decompiler 100 may obtain the first code based on the storage path. The user may further trigger a decompilation operation on the first code by using the code decompilation control 404. The decompiler 100 may start cross-platform decompilation on the first code in response to the operation.

It should be noted that the first code may be part of code in a code file, or may be all code in the code file. This is not limited in the embodiments of this application.

S304: The decompiler 100 relocates addresses of variables associated with functions in the first code, to obtain logical addresses of the variables, which is a feature according to the claimed invention.

The first code includes at least one function call. A called function includes an independent variable and a dependent variable. The independent variable is a condition or a factor that can be manipulated to cause a change of the dependent variable, and the dependent variable is a variable that changes with the independent variable. When the independent variable is set to a unique value, the dependent variable has exactly one unique value corresponding to the value of the independent variable. Based on this, the variables associated with the functions may include at least one of the foregoing independent variable and dependent variable. For example, in a function $y = a + b * c$, variables associated with the function include independent variables a, b, and c, and a dependent variable y.

In this embodiment, the addresses of the variables associated with the functions in the first code (for example, code in an obj file) are relative addresses, that is, an address of each variable is uncertain. Therefore, the decompiler 100 may relocate the variables associated with the functions in the first code, to determine a logical address of each variable. The logical address is specifically an absolute address of the variable.

Specifically, the first code includes a code region, a symbol region, a data region, and a relocation table. The code region mainly includes code. The symbol region mainly includes symbols of variables. The data region mainly includes data in the code. The relocation table mainly includes logical addresses of the variables. Based on this, the decompiler 100 may obtain a relocation table from the first code, and then obtain, by accessing the relocation table, the logical addresses of the variables associated with the functions in the first code, to relocate the addresses of the variables associated with the functions in the first code, which is a feature according to the claimed invention.

Further, when relocating, based on the relocation table, the addresses of the variables associated with the functions in the first code, the decompiler 100 may further perform relocation based on types of the variables. Specifically, the decompiler 100 may determine relocation types based on types of the variables associated with the functions in the first code, and then relocate, based on the relocation table and the relocation types, the addresses of the variables associated with the functions in the first code, which is a feature according to the claimed invention .

The types of the variables may be a local variable and a global variable. Certainly, the types of the variables may alternatively be a static variable and a dynamic variable based on whether an original value is retained. The decompiler 100 may determine the relocation types based on the relocation table according to types of the variables and associated compilation options. A compilation option is used to indicate a compilation manner. For example, fpIC indicates that code is position independent code (position independent code, PIC), and mcmodel indicates a code model, which is a feature according to the claimed invention. A value of mcmodel may be small, medium, or large, which are respectively used to indicate a small code model, a medium code model, and a large code model, which is a feature according to the claimed invention.

For example, for a common variable such as a global variable or a static variable, when mcmodel = large, the decompiler 100 determines, based on an immediate number instruction of a relocation instruction section, that a relocation type is R_X86_64_64, that is, an addressing mode is changed to immediate addressing. After determining the addressing mode, the decompiler 100 may obtain a logical address of the variable based on the relocation table according to the immediate addressing mode.

Further, the decompiler 100 may associate the absolute address with a symbol of the variable, to relocate the addresses of the variables associated with the function.

S306: The decompiler 100 performs decompilation based on the logical addresses of the variables and the first code, to obtain second code applicable to a target platform, which is a feature according to the claimed invention.

The target platform is a platform different from the source platform. The target platform may be any one of platforms such as an x86 platform and an ARM platform. When the source platform is the x86 platform, the target platform may be the ARM platform. When the source platform is the ARM platform, the target platform may be the x86 platform.

The second code applicable to the target platform may be low-level programming language code applicable to the target platform. For example, when the first code is code in a machine language on the x86 platform, the second code may be code in the machine language on the ARM platform. Further, the second code may alternatively be code in an assembly language on the ARM platform.

The second code applicable to the target platform may alternatively be high-level programming language code. For example, when the first code is code in the machine language on the x86 platform, the second code may be code in a C language, code in a Java language, code in a Python language, or the like.

In this embodiment, the logical addresses of the variables and the first code may form a complete executable file, and the decompiler 100 may decompile the complete executable file, to obtain the second code applicable to the target platform.

Specifically, the decompiler 100 may perform decompilation based on the logical addresses of the variables and the first code, to obtain a compiler intermediate representation (intermediate representation, IR) related to the target platform.

An intermediate representation specifically refers to code represented by using an intermediate language. In a process of compilation or decompilation, a compiler or the decompiler may translate the first code into code represented by using an intermediate language, that is, an intermediate representation, and then translate the intermediate representation to obtain the second code.

Because the decompiler 100 performs decompilation based on the logical addresses of the variables obtained after the relocation and the first code, the intermediate representation obtained by the decompiler 100 includes definitions of the variables associated with the function. The definitions of the variables associate symbols of the variables with the logical addresses of the variables. The decompiler 100 may generate pseudocode with correct logic based on the intermediate representation, to further generate the corresponding second code. In this way, a logic error in generated pseudocode caused due to uncertain definitions and access addresses of the variables is overcome. This improves accuracy and reliability of decompilation.

In some possible implementations, the decompiler 100 may compile the compiler intermediate representation, to obtain the second code applicable to the target platform. The second code may be machine language code applicable to the target platform (for example, code in an obj format).

In some other possible implementations, after obtaining the low-level programming language code applicable to the target platform, for example, after obtaining the machine language code, the decompiler 100 may further perform further processing on the low-level programming language code, for example, perform disassembly, to obtain assembly language code. The second code may further be assembly language code applicable to the target platform. Certainly, the decompiler 100 may alternatively process the compiler intermediate representation, to obtain high-level programming language code. The second code may further be high-level programming language code.

After obtaining the second code by decompiling the first code, the decompiler 100 may further output the second code. In some embodiments, the decompiler 100 may output the second code as a file. In some other embodiments, the decompiler 100 may alternatively present the second code to a user by using a user interface, for example, a GUI or a CUI.

Based on the foregoing content description, an embodiment of this application provides a code processing method. In the method, first code obtained through compilation is converted through decompilation into an intermediate representation related to a target platform, and then second code applicable to a target platform is obtained by compiling the intermediate representation. In this way, cross-platform decompilation of the first code is implemented, a technical threshold for cross-platform code migration is reduced, and efficiency of code migration is improved. In addition, the method resolves a problem that address redirection information of a low-level programming language module is missing in a decompilation process, thereby improving accuracy and reliability of decompilation.

In the embodiment shown in FIG. 3, considering a difference between function calling rules on different platforms, before the decompiler 100 performs cross-platform decompilation on the code, specifically, before performing decompilation based on the logical addresses of the variables obtained after the relocation and the first code, the decompiler 100 may adjust parameters of the functions in the first code based on a difference between function calling rules of the source platform and the target platform.

Specifically, the parameters of the functions are stored in a register or a stack of a memory. Storage manners of parameters vary depending on a platform. The decompiler 100 may adjust register information and/or stack information of the functions in the first code based on the difference between the function calling rules of the source platform and the target platform. For example, the decompiler 100 may adjust parameters stored in a register, to store the parameters in a stack; or adjust parameters stored in a stack, to store the parameters in a register.

Before adjusting the register information and/or the stack information, the decompiler 100 may first decode the first code by using a decoding (decode) tool, for example, Intel XED, to obtain an instruction control flow. Then, the decompiler 100 may perform a data flow analysis algorithm for the instruction control flow, to analyze an active register and stack, to obtain types and a quantity of the parameters of the functions in the first code. A type of a parameter is mainly used to indicate that the parameter is stored in a register or stored in a stack.

For ease of understanding, processes of register analysis and stack analysis are respectively described below in detail.

First, in this embodiment, several data sets are defined as follows:

Use[n]: set of variables used by n;
Def[n]: set of variables defined by n;
In[n]: variables live on entry to n; and
Out[n]: variables live on exit to n.

Herein, variables represent a register corresponding to the variables, In[n] and Out[n] represent sets of registers respectively corresponding to input and output, and Def[n] and Use[n] represent sets of registers respectively corresponding to a definition and usage.

The decompiler 100 may traverse blocks (block) in the first code, and construct a use set and a def set of each block. A specific construction process is as follows:

traversing instructions in a block based on an instruction execution order in the block;
if an operand type of an instruction is Register and an action is kActionRead, adding the instruction to a use set;
if an operand type of an instruction is Register and an action is kActionWrite, adding the instruction to a def set; and
if an operand type of an instruction is Address, adding base_reg and index_reg of the instruction to the use set.

The decompiler 100 may establish a data flow analysis equation based on the foregoing sets, as shown below:

$$in[n] \supseteq use[n]$$

$$in[n] \supseteq out[n] - def[n] \tag{1}$$

$$out[n] \supseteq in[n'], \text{ if } n' \in succ[n]$$

Herein, n represents a block, and the symbol $\supseteq$ indicates that a set on the right side of the symbol is a subset of a set on the left side of the symbol. succ[n] indicates a register that is still valid in a block.

The decompiler 100 may solve the foregoing equation by using a fixed point algorithm, as shown below:
$out[n] = \cup_{i \in succ[n]} in[i]$, where i is a subsequent block of all n

$$in[n] = use[n] \cup (out[n] - def[n]) \tag{2}$$

After the fixed point algorithm, an intersection of an in set of a function entry and an input parameter Reg specified by Calling Convention is an input parameter register. An intersection of an out set of a function exit and an output parameter Reg specified by Calling Convention is a possible return value register.

When performing stack analysis, the decompiler 100 may analyze the instruction control flow by using an algorithm based on a rex-extended stack pointer (rex-extended stack pointer, RSP) or an algorithm based on a rex-extended base pointer (rex-extended base pointer, RBP).

A process in which the decompiler 100 performs analysis by using an algorithm based on the RSP may specifically include the following steps.

a: Check whether the RSP has an offset based on a function prologue part (an entry basic block) and record an offset value off.
The decompiler 100 may determine an offset by using a sub instruction or a push instruction. The decompiler 100 further records a register associated with the RSP.
b: Traverse all instructions of all blocks and search for a usage scenario in which an operand type is kTypeAddress, an action is kActionRead, base_reg = RSP (an associated register), and memory displacement (displacement, dis) is a positive number. The parameter is a $((dis - off)/8)^{th}$ stack parameter. Then, a total quantity S of parameters is obtained through statistics.
c: If a rule b is met, further differentiate types of the parameters:
if an operand of another register of the same instruction is an integer register (RXX), and the instruction is an instruction related to conversion from a non-floating point type to an integer type, it is determined that the stack parameter is of the integer type; and if an operand of another register of the same instruction is a floating point register (XMM), and the instruction is an instruction related to conversion from a non-integer type to a floating point type, it is determined that the stack parameter is of the floating point type.

A process in which the decompiler 100 performs analysis by using an algorithm based on the RBP may specifically include the following steps.

a: Traverse all instructions of all blocks and search for a usage scenario in which an operand type is kTypeAddress, an action is kActionRead, base_reg = RBP, and dis is a positive number. The parameter is a $((dis - 8)/8)^{th}$ stack parameter. Then, a total quantity X of parameters is obtained through statistics.
b: If a rule a is met, further differentiate types of the parameters:
if an operand of another register of the same instruction is an integer register (RXX), and the instruction is an instruction related to conversion from a non-floating point type to an integer type, it is determined that the stack parameter is of the integer type; and if an operand of another register of the same instruction is a floating point register (XMM), and the instruction is an instruction related to conversion from a non-integer type to a floating point type, it is determined that the stack parameter is of the floating point type.

In some possible implementations, the decompiler 100 may simultaneously execute the foregoing two algorithms, and then select a maximum value in total quantities S that are of the parameters and that are determined by the two algorithms.

After the total quantity of the parameters and the types of the parameters are obtained, the decompiler 100 may adjust storage locations of the parameters based on the difference between the function calling rules. Specifically, the decompiler 100 performs cross-platform processing on the input parameter register and the stack based on the difference between the function calling rules, for example, adds several parameters in the register into the stack, switches a stack pointer, and the like, so that input parameter registers and stacks at runtimes in different platforms have a same spatial perspective.

For ease of understanding, a specific example is used for description below.

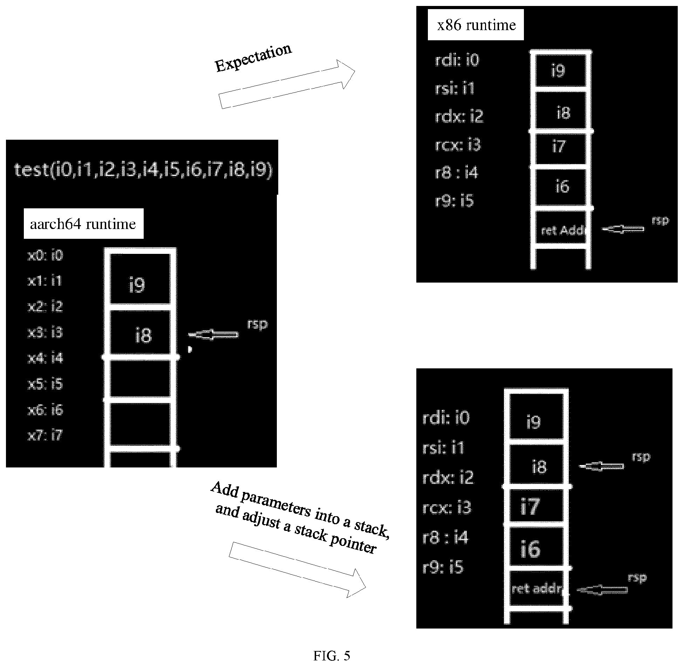

FIG. 5 is a schematic diagram of adjusting parameters of a function. In this example, a function test includes 10 parameters in total from i0 to i9. At a runtime on an x86 platform, the parameters i0 to i5 are stored in a register, and the parameters i6 to i9 are stored in a stack. At a runtime on an ARM platform, the parameters i0 to i7 are stored in a register, and the parameters i8 to i9 are stored in a stack. The decompiler 100 may add the parameters i6 and i7 into the stack, and switch a stack pointer, so that input parameter registers and stacks at runtimes in different platforms have a same spatial perspective.

In the method, register analysis and stack analysis are active by using a compiler, to obtain an exact input parameter register and stack input parameter, thereby reducing unnecessary conversion of registers in function call conventions.

In addition, this application further provides a specific example for detailed description of relocating the addresses of the variables associated with the function, and obtaining the second code through decompilation based on the logical addresses obtained after the relocation and the first code.

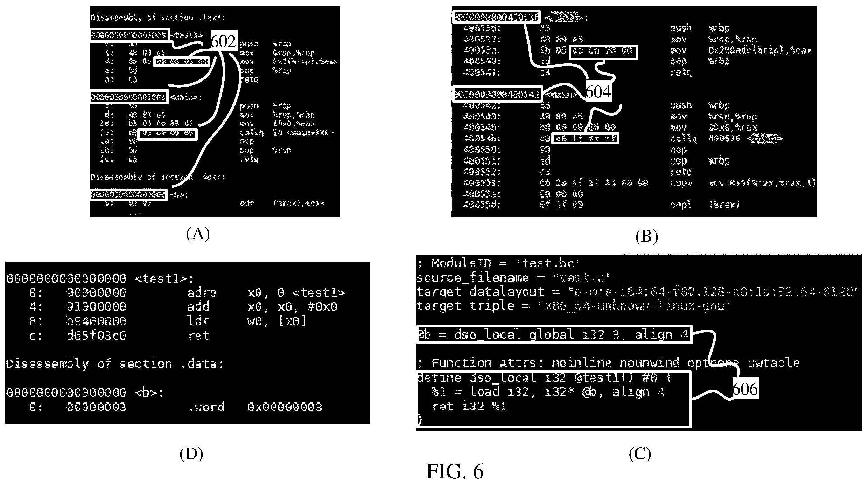

FIG. 6 is a schematic flowchart of a code processing method. As shown in FIG. 6, the decompiler 100 first obtains first code that is to be decompiled. As shown in (A) in FIG. 6, the first code includes at least one function call, for example, test1 and main, and each called function is associated with variables. Addresses of variables are specifically shown in a marking box 602 in (A). It can be learned based on 602 that the addresses of the variables in the first code are relative addresses.

Then, refer to (B) in FIG. 6. The decompiler 100 performs relocation on variables associated with functions in the first code. For example, an address of test1 is redirected from 0000000000000000 to 0000000000400536, an address of main is redirected from 000000000000000c to 0000000000400542, and an address of a variable associated with a function body of test1 is redirected from 00 00 00 00 to dc 0a 20 00. Examples are not listed one by one herein. The addresses of the variables obtained after the relocation are shown in a marking box 604 in (B).

Then, refer to (C) in FIG. 6. The decompiler 100 performs decompilation based on the addresses of the variables obtained after the relocation and the first code, to obtain a compiler intermediate representation. The compiler intermediate representation includes definitions of the variables, as shown in 606 in (C). As shown in 606, @test1 is a definition of test1.

Finally, refer to (D) in FIG. 6. The decompiler 100 generates, based on the compiler intermediate representation, second code applicable to a target platform such as an ARM platform, which is specifically assembly language code applicable to the ARM platform.

It should be noted that the first code is machine language code, and is specifically binary code. To improve readability, in (A) and (B) in FIG. 6, code obtained after disassembly is performed on the first code is used as an example for description.

The code processing method provided in the embodiments of this application is described above in detail with reference to FIG. 1 to FIG. 6. An apparatus and a device provided in the embodiments of this application are described below with reference to the accompanying drawings.

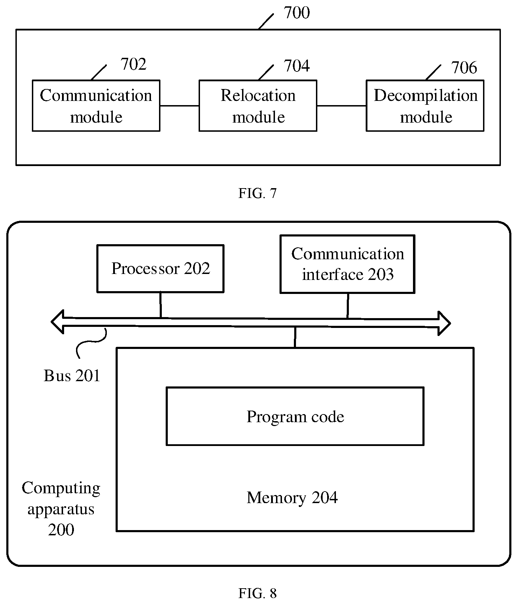

FIG. 7 is a schematic diagram of a structure of a code processing apparatus. The apparatus 700 may be an apparatus for implementing a function of the decompiler 100. The apparatus 700 includes:

> a communication module 702, configured to obtain first code, where the first code is code that is obtained through compilation and that is applicable to a source platform;
> a relocation module 704, configured to relocate addresses of variables associated with functions in the first code, to obtain logical addresses of the variables; and
> a decompilation module 706, configured to perform decompilation based on the logical addresses of the variables and the first code, to obtain second code applicable to a target platform.

In some possible implementations, the decompilation module 706 is specifically configured to:

> perform decompilation based on the logical addresses of the variables and the first code, to obtain a compiler intermediate representation related to the target platform, where the compiler intermediate representation includes definitions of the variables, and the definitions of the variables associate symbols of the variables with the addresses; and
> generate the second code applicable to the target platform based on the compiler intermediate representation.

In some possible implementations, the compiler intermediate representation includes a first variable and a second variable. The first variable has a first logical address, the second variable has a second logical address, and the first logical address is different from the second logical address.

In some possible implementations, the relocation module 704 is specifically configured to:

> obtain a relocation table from the first code, where the relocation table stores the logical addresses of the variables; and
> relocate, based on the relocation table, the addresses of the variables associated with the functions in the first code.

In some possible implementations, the relocation module 704 is specifically configured to:

> determine relocation types based on types of the variables associated with the functions in the first code; and
> relocate, based on the relocation table and the relocation types, the addresses of the variables associated with the functions in the first code.

In some possible implementations, the apparatus 700 further includes:
an adjustment module, configured to: before decompilation is performed based on the logical addresses of the variables and the first code, adjust parameters of the functions in the first code based on a difference between function calling rules of the source platform and the target platform.

In some possible implementations, the adjustment module is specifically configured to:
adjust register information or stack information of the functions in the first code based on the difference between the function calling rules of the source platform and the target platform.

In some possible implementations, the communication module 702 is specifically configured to:
receive the first code input by a user through a graphical user interface.

The code processing apparatus 700 according to the embodiments of this application may correspondingly perform the method described in the embodiments of this application. In addition, the foregoing and other operations and/or functions of the modules/units of the code processing apparatus 700 are respectively used to implement corresponding procedures of the method in the embodiment shown in FIG. 3. For brevity, details are not described herein again.

An embodiment of this application further provides a computing apparatus 200. The computing apparatus 200 may be a terminal side device such as a notebook computer or a desktop computer. The computing apparatus 200 is specifically configured to implement a function of the code processing apparatus 700 in the embodiment shown in FIG. 7.

FIG. 8 is a schematic diagram of a structure of a computing apparatus 200. As shown in FIG. 8, the computing apparatus 200 includes a bus 201, a processor 202, a communication interface 203, and a memory 204. The processor 202, the memory 204, and the communication interface 203 communicate with each other through the bus 201.

The bus 201 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is for representing the bus in FIG. 8, but this does not mean that there is only one bus or only one type of bus.

The processor 202 may be any one or more of processors such as a central processing unit (central processing unit, CPU), a graphics processing unit (graphics processing unit, GPU), a microprocessor (micro processor, MP), or a digital signal processor (digital signal processor, DSP).

The communication interface 203 is configured to communicate with the outside. For example, the communication interface is configured to obtain first code applicable to a source platform, where the first code is code obtained through compilation, for example, code in an obj file; or output second code applicable to a target platform.

The memory 204 may include a volatile memory (volatile memory), for example, a random access memory (random access memory, RAM). The memory 204 may alternatively include a non-volatile memory (non-volatile memory), for example, a read-only memory (read-only memory, ROM), a flash memory, a hard disk drive (hard disk drive, HDD), or a solid state drive (solid state drive, SSD).

The memory 204 stores executable code, and the processor 202 executes the executable code to perform the foregoing code processing method.

Specifically, when the embodiment shown in FIG. 7 is implemented, and the modules of the code processing apparatus 700 described in the embodiment of FIG. 7 are implemented by using software, software or program code required for performing functions of modules such as the relocation module 704 and the decompilation module 706 in FIG. 7 is stored in the memory 204. A function of the communication module 702 is implemented by using the communication interface 203.

Specifically, the communication interface 203 obtains first code. The first code is code that is obtained through compilation and that is applicable to a source platform. The communication interface 203 transmits the first code to the processor 202 by using the bus 201. The processor 202 executes program code that is corresponding to each module and that is stored in the memory 204, for example, program code corresponding to the relocation module 704 and the decompilation module 706, to perform steps of relocating addresses of variables associated with functions in the first code, to obtain logical addresses of the variables, and then performing decompilation based on the logical addresses of the variables obtained after the relocation and the first code, to obtain second code applicable to a target platform.

Optionally, the processor 202 may further be configured to perform method steps corresponding to another possible implementation in the embodiment shown in FIG. 3.

The computing apparatus 200 is described by using an apparatus located on a terminal side as an example. An embodiment of this application further provides a cloud computing apparatus in a cloud environment 300, for example, a central server. The cloud computing apparatus has a structure similar to that of the computing apparatus 200 on a terminal side, and has a same function as the computing apparatus 200, that is, a function of performing cross-platform decompilation on code.

Couplings in the embodiments of this application are indirect couplings or communication connections between apparatuses, units, or modules, may be electrical, mechanical, or another form, and are used for information exchange between the apparatuses, the units, and the modules. In the embodiments of this application, a specific connection medium used to connect the communication interface 203, the processor 202, and the memory 204 is not limited. For example, the memory, the processor, and the communication interface may be connected by using a bus. The bus may be classified into an address bus, a data bus, a control bus, and the like.

Based on the foregoing embodiments, an embodiment of this application further provides a computer storage medium. The storage medium stores a software program. When the software program is read and executed by one or more processors, the method performed by the terminal device and the cloud computing device provided in any one or more of the foregoing embodiments may be implemented. The computer storage medium may include: any medium that can store program code, such as a USB flash disk, a removable hard disk, a read-only memory, a random access memory, a magnetic disk, or an optical disc.

Based on the foregoing embodiments, an embodiment of this application further provides a chip. The chip includes a processor, configured to implement functions of the terminal device or the cloud computing device in the foregoing embodiments, for example, configured to implement the methods performed by the computing apparatus 200 and the cloud computing device in the cloud environment 300 in FIG. 1 and FIG. 2.

Optionally, the chip further includes a memory. The memory is configured to store necessary program instructions and data that executed by the processor. The chip may include a chip, or may include a chip and another discrete device.

A person skilled in the art should understand that the embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to the embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to embodiments of this application without departing from the scope of the embodiments of this application. This application is intended to cover these modifications and variations provided that they fall within the scope of protection defined by the following claims and their equivalent technologies. The invention and its scope of protection is defined by the appended independent claims. Embodiments of the invention are defined by the appended dependent claims computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

**Claims**

1. A code processing method, wherein the method comprises:

   obtaining (S302), by a decompiler, first code, wherein the first code is code that is obtained through compilation and that is applicable to a source platform;
   relocating (S304), by the decompiler, addresses of variables associated with functions in the first code, to obtain logical addresses of the variables, comprising obtaining a relocation table from the first code, wherein the relocation table stores the logical addresses of the variables, and obtaining, by accessing the relocation table, the logical addresses of the variables associated with the functions in the first code, to relocate the addresses of the variables associated with the functions in the first code, and further comprising determining relocation types based on types of the variables associated with the functions in the first code and associated compilation options, wherein a compilation option is used to indicate a compilation manner, and relocating, based on the relocation table and the relocation types, the addresses of the variables associated with the functions in the first code, and wherein the compilation manner comprises: code is position independent code, PIC, a code model is a small code model, a code model is a medium code model, or a code model is a large code model; and
   performing (S306), by the decompiler, decompilation based on the logical addresses of the variables and the first code, to obtain second code applicable to a target platform.

2. The method according to claim 1, wherein the performing decompilation based on the logical addresses of the variables and the first code, to obtain second code applicable to a target platform comprises:

   performing decompilation based on the logical addresses of the variables and the first code, to obtain a compiler intermediate representation related to the target platform, wherein the compiler intermediate representation comprises definitions of the variables, and the definitions of the variables associate symbols of the variables with the logical addresses; and

generating the second code applicable to the target platform based on the compiler intermediate representation.

3.  The method according to claim 2, wherein the compiler intermediate representation comprises a first variable and a second variable, the first variable has a first logical address, the second variable has a second logical address, and the first logical address is different from the second logical address.

4.  The method according to any one of claims 1 to 3, wherein before the performing decompilation based on the logical addresses of the variables and the first code, the method further comprises:
adjusting parameters of the functions in the first code based on a difference between function calling rules of the source platform and the target platform.

5.  The method according to claim 4, wherein the adjusting parameters of the functions in the first code based on a difference between function calling rules of the source platform and the target platform comprises:
adjusting register information or stack information of the functions in the first code based on the difference between the function calling rules of the source platform and the target platform.

6.  The method according to any one of claims 1 to 5, wherein the obtaining first code comprises:
receiving the first code input by a user through a graphical user interface.

7.  A code processing apparatus, wherein the apparatus comprises:

a communication module (702), configured to obtain first code, wherein the first code is code that is obtained through compilation and that is applicable to a source platform;
a relocation module (704) , configured to relocate addresses of variables associated with functions in the first code, to obtain logical addresses of the variables, comprising obtain a relocation table from the first code, wherein the relocation table stores the logical addresses of the variables, and obtain, by access of the relocation table, the logical addresses of the variables associated with the functions in the first code, to relocate the addresses of the variables associated with the functions in the first code, and further comprising determination of relocation types based on types of the variables associated with the functions in the first code and associated compilation options, wherein a compilation option is used to indicate a compilation manner, and relocation, based on the relocation table and the relocation types, the addresses of the variables associated with the functions in the first code, and wherein the compilation manner comprises: code is position independent code, PIC, a code model is a small code model, a code model is a medium code model, or a code model is a large code model; and
a decompilation module (706) , configured to perform decompilation based on the logical addresses of the variables and the first code, to obtain second code applicable to a target platform.

8.  The apparatus according to claim 7, wherein the decompilation module is specifically configured to:

perform decompilation based on the logical addresses of the variables and the first code, to obtain a compiler intermediate representation related to the target platform, wherein the compiler intermediate representation comprises definitions of the variables, and the definitions of the variables associate symbols of the variables with the logical addresses; and
generate the second code applicable to the target platform based on the compiler intermediate representation.

9.  The apparatus according to claim 8, wherein the compiler intermediate representation comprises a first variable and a second variable, the first variable has a first logical address, the second variable has a second logical address, and the first logical address is different from the second logical address.

10. The apparatus according to any one of claims 7 to 9, wherein the apparatus further comprises:
an adjustment module, configured to: before decompilation is performed based on the logical addresses of the variables and the first code, adjust parameters of the functions in the first code based on a difference between function calling rules of the source platform and the target platform.

**Patentansprüche**

1. Codeverarbeitungsverfahren, wobei das Verfahren Folgendes umfasst:

   Erhalten (S302) eines ersten Codes durch einen Dekompilierer, wobei der erste Code ein Code ist, der durch Kompilierung erhalten wird und der auf eine Quellplattform anwendbar ist;
   Verschieben (S304) von Adressen von mit Funktionen in dem ersten Code verknüpften Variablen durch den Dekompilierer, um logische Adressen der Variablen zu erhalten, umfassend ein Erhalten einer Verschiebungstabelle aus dem ersten Code, wobei die Verschiebungstabelle die logischen Adressen der Variablen speichert, und ein Erhalten der logischen Adressen der mit den Funktionen in dem ersten Code verknüpften Variablen durch Zugreifen auf die Verschiebungstabelle, um die Adressen der mit den Funktionen in dem ersten Code verknüpften Variablen zu verschieben, und ferner umfassend ein Bestimmen von Verschiebungsarten basierend auf Arten der mit den Funktionen in dem ersten Code verknüpften Variablen und verknüpften Kompilierungsoptionen, wobei eine Kompilierungsoption verwendet wird, um eine Kompilierungsweise anzuzeigen, und ein Verschieben der Adressen der mit den Funktionen in dem ersten Code verknüpften Variablen basierend auf der Verschiebungstabelle und den Verschiebungsarten und wobei die Kompilierungsweise Folgendes umfasst: der Code ist ein positionsunabhängiger Code (PIC), ein Codemodell ist ein kleines Codemodell, ein Codemodell ist ein mittleres Codemodell oder ein Codemodell ist ein großes Codemodell; und
   Durchführen (S306) einer Dekompilierung durch den Dekompilierer basierend auf den logischen Adressen der Variablen und dem ersten Code, um einen zweiten Code zu erhalten, der auf eine Zielplattform anwendbar ist.

2. Verfahren nach Anspruch 1, wobei das Durchführen der Dekompilierung basierend auf den logischen Adressen der Variablen und dem ersten Code, um den zweiten Code zu erhalten, der auf eine Zielplattform anwendbar ist, Folgendes umfasst:

   Durchführen einer Dekompilierung basierend auf den logischen Adressen der Variablen und dem ersten Code, um eine die Zielplattform betreffende Kompiliererzwischendarstellung zu erhalten, wobei die Kompiliererzwischendarstellung Definitionen der Variablen umfasst und die Definitionen der Variablen Symbole der Variablen mit den logischen Adressen verknüpfen; und
   Erzeugen des auf die Zielplattform anwendbaren zweiten Codes basierend auf der Kompiliererzwischendarstellung.

3. Verfahren nach Anspruch 2, wobei die Kompiliererzwischendarstellung eine erste Variable und eine zweite Variable umfasst, die erste Variable eine erste logische Adresse aufweist, die zweite Variable eine zweite logische Adresse aufweist und die erste logische Adresse von der zweiten logischen Adresse verschieden ist.

4. Verfahren nach einem der Ansprüche 1 bis 3, wobei das Verfahren vor dem Durchführen der Dekompilierung basierend auf den logischen Adressen der Variablen und dem ersten Code ferner Folgendes umfasst:
   Anpassen von Parametern der Funktionen in dem ersten Code basierend auf einem Unterschied zwischen Funktionsaufrufregeln der Quellplattform und der Zielplattform.

5. Verfahren nach Anspruch 4, wobei das Anpassen der Parameter der Funktionen in dem ersten Code basierend auf einem Unterschied zwischen Funktionsaufrufregeln der Quellplattform und der Zielplattform Folgendes umfasst:
   Anpassen von Registerinformationen oder Stapelinformationen der Funktionen in dem ersten Code basierend auf dem Unterschied zwischen den Funktionsaufrufregeln der Quellplattform und der Zielplattform.

6. Verfahren nach einem der Ansprüche 1 bis 5, wobei das Erhalten des ersten Codes Folgendes umfasst: Empfangen des ersten Codes, der durch einen Benutzer über eine grafische Benutzeroberfläche eingegeben wird.

7. Codeverarbeitungsvorrichtung, wobei die Vorrichtung Folgendes umfasst:

   ein Kommunikationsmodul (702), das dazu konfiguriert ist, einen ersten Code zu erhalten, wobei der erste Code ein Code ist, der durch Kompilierung erhalten wird und der auf eine Quellplattform anwendbar ist;
   ein Verschiebungsmodul (704), das dazu konfiguriert ist, Adressen von mit Funktionen in dem ersten Code verknüpften Variablen zu verschieben, um logische Adressen der Variablen zu erhalten, umfassend ein Erhalten einer Verschiebungstabelle aus dem ersten Code, wobei die Verschiebungstabelle die logischen Adressen der Variablen speichert, und ein Erhalten der logischen Adressen der mit den Funktionen in dem ersten Code verknüpften Variablen durch Zugriff auf die Verschiebungstabelle, um die Adressen der mit den Funktionen in dem ersten Code verknüpften Variablen zu verschieben, und ferner umfassend eine Bestimmung von Verschiebungsarten basierend auf Arten der mit den Funktionen in dem ersten Code verknüpften Variablen und verknüpften Kompilierungsoptionen, wobei eine Kompilierungsoption verwendet wird, um eine Kompilierungsweise anzuzeigen, und eine Verschiebung der Adressen der mit den Funktionen in dem ersten Code verknüpften Variablen basierend auf der Verschiebungstabelle und den Verschiebungsarten und wobei die Kompilierungsweise Folgendes umfasst: der Code ist ein positionsunabhängiger Code (PIC), ein Codemodell ist ein kleines Codemodell, ein Codemodell ist ein mittleres Codemodell oder ein Codemodell ist ein großes Codemodell; und ein Dekompilierungsmodul (706), das dazu konfiguriert ist, basierend auf den logischen Adressen der Variablen und dem ersten Code eine Dekompilierung durchzuführen, um einen zweiten Code zu erhalten, der auf eine Zielplattform anwendbar ist.

8. Vorrichtung nach Anspruch 7, wobei das Dekompilierungsmodul spezifisch zu Folgendem konfiguriert ist:

Durchführen einer Dekompilierung basierend auf den logischen Adressen der Variablen und dem ersten Code, um eine die Zielplattform betreffende Kompiliererzwischendarstellung zu erhalten, wobei die Kompiliererzwischendarstellung Definitionen der Variablen umfasst und die Definitionen der Variablen Symbole der Variablen mit den logischen Adressen verknüpfen; und
Erzeugen des auf die Zielplattform anwendbaren zweiten Codes basierend auf der Kompiliererzwischendarstellung.

9. Vorrichtung nach Anspruch 8, wobei die Kompiliererzwischendarstellung eine erste Variable und eine zweite Variable umfasst, die erste Variable eine erste logische Adresse aufweist, die zweite Variable eine zweite logische Adresse aufweist und die erste logische Adresse von der zweiten logischen Adresse verschieden ist.

10. Vorrichtung nach einem der Ansprüche 7 bis 9, wobei die Vorrichtung ferner Folgendes umfasst:
ein Anpassungsmodul, das zu Folgendem konfiguriert ist: bevor die Dekompilierung basierend auf den logischen Adressen der Variablen und dem ersten Code durchgeführt wird, Anpassen von Parametern der Funktionen in dem ersten Code basierend auf einem Unterschied zwischen Funktionsaufrufregeln der Quellplattform und der Zielplattform.

**Revendications**

1. Procédé de traitement de code, dans lequel le procédé comprend :

l'obtention (S302), par un décompilateur, d'un premier code, dans lequel le premier code est un code qui est obtenu par compilation et qui est applicable à une plateforme source ;
la relocalisation (S304), par le décompilateur, d'adresses de variables associées aux fonctions dans le premier code, pour obtenir les adresses logiques des variables, comprenant l'obtention d'une table de relocalisation à partir du premier code, dans lequel la table de relocalisation stocke les adresses logiques des variables, et l'obtention, en accédant à la table de relocalisation, des adresses logiques des variables associées aux fonctions dans le premier code, pour relocaliser les adresses des variables associées aux fonctions dans le premier code, et
comprenant en outre la détermination de types de relocalisation sur la base de types des variables associées aux fonctions dans le premier code et d'options de compilation associées, dans lequel une option de compilation est utilisée pour indiquer un mode de compilation, et la relocalisation, sur la base de la table de relocalisation et des types de relocalisation, des adresses des variables associées aux fonctions dans le premier code, et dans lequel le mode de compilation comprend : le code est un code indépendant d'une position, PIC, un modèle de code est un petit modèle de code, un modèle de code est un modèle de code moyen ou un modèle de code est un grand modèle de code ; et
la réalisation (S306), par le décompilateur, d'une décompilation sur la base des adresses logiques des variables et du premier code, pour obtenir un second code applicable à une plateforme cible.

2. Procédé selon la revendication 1, dans lequel la réalisation d'une décompilation sur la base des adresses logiques des variables et du premier code, pour obtenir un second code applicable à une plateforme cible comprend :

la réalisation d'une décompilation sur la base des adresses logiques des variables et du premier code, pour obtenir une représentation intermédiaire de compilateur relative à la plateforme cible, dans lequel la représentation intermédiaire de compilateur comprend les définitions des variables, et les définitions des variables associent les symboles des variables aux adresses logiques ; et

la génération du second code applicable à la plateforme cible sur la base de la représentation intermédiaire de compilateur.

3. Procédé selon la revendication 2, dans lequel la représentation intermédiaire de compilateur comprend une première variable et une seconde variable, la première variable a une première adresse logique, la seconde variable a une seconde adresse logique, et la première adresse logique est différente de la seconde adresse logique.

4. Procédé selon l'une quelconque des revendications 1 à 3, dans lequel avant la réalisation d'une décompilation sur la base des adresses logiques des variables et du premier code, le procédé comprend en outre :
l'ajustement de paramètres des fonctions dans le premier code sur la base d'une différence entre les règles d'appel de fonction de la plateforme source et de la plateforme cible.

5. Procédé selon la revendication 4, dans lequel l'ajustement de paramètres des fonctions dans le premier code sur la base d'une différence entre les règles d'appel de fonction de la plateforme source et de la plateforme cible comprend :
l'ajustement d'informations de registre ou d'informations de pile des fonctions dans le premier code sur la base de la différence entre les règles d'appel de fonction de la plateforme source et de la plateforme cible.

6. Procédé selon l'une quelconque des revendications 1 à 5, dans lequel l'obtention du premier code comprend : la réception du premier code saisi par un utilisateur via une interface utilisateur graphique.

7. Appareil de traitement de code, dans lequel l'appareil comprend :

un module de communication (702), configuré pour obtenir un premier code, dans lequel le premier code est un code qui est obtenu par compilation et qui est applicable à une plateforme source ;
un module de relocalisation (704), configuré pour relocaliser des adresses de variables associées aux fonctions dans le premier code, pour obtenir les adresses logiques des variables, comprenant l'obtention d'une table de relocalisation à partir du premier code, dans lequel la table de relocalisation stocke les adresses logiques des variables, et l'obtention, en accédant à la table de relocalisation, des adresses logiques des variables associées aux fonctions dans le premier code, pour relocaliser les adresses des variables associées aux fonctions dans le premier code, et comprenant en outre la détermination de types de relocalisation sur la base de types des variables associées aux fonctions dans le premier code et d'options de compilation associées, dans lequel une option de compilation est utilisée pour indiquer un mode de compilation, et la relocalisation, sur la base de la table de relocalisation et des types de relocalisation, des adresses des variables associées aux fonctions dans le premier code, et dans lequel le mode de compilation comprend : le code est un code indépendant d'une position, PIC, un modèle de code est un petit modèle de code, un modèle de code est un modèle de code moyen ou un modèle de code est un grand modèle de code ; et
un module de décompilation (706), configuré pour réaliser une décompilation sur la base des adresses logiques des variables et du premier code, pour obtenir un second code applicable à une plateforme cible.

8. Appareil selon la revendication 7, dans lequel le module de décompilation est configuré spécifiquement pour :

réaliser une décompilation sur la base des adresses logiques des variables et du premier code, pour obtenir une représentation intermédiaire de compilateur relative à la plateforme cible, dans lequel la représentation intermédiaire de compilateur comprend les définitions des variables, et les définitions des variables associent les symboles des variables aux adresses logiques ; et
générer le second code applicable à la plateforme cible sur la base de la représentation intermédiaire de compilateur.

9. Appareil selon la revendication 8, dans lequel la représentation intermédiaire de compilateur comprend une première variable et une seconde variable, la première variable a une première adresse logique, la seconde variable a une seconde adresse logique, et la première adresse logique est différente de la seconde adresse logique.

10. Appareil selon l'une quelconque des revendications 7 à 9, dans lequel l'appareil comprend en outre :
un module d'ajustement, configuré pour : avant que la décompilation ne soit réalisée sur la base des adresses logiques des variables et du premier code, ajuster les paramètres des fonctions dans le premier code sur la base d'une différence entre les règles d'appel de fonction de la plateforme source et de la plateforme cible.

Computing
apparatus 200

Decompiler 100

FIG. 1

Computing
apparatus 200

Cloud
environment 300

Decompiler 100

FIG. 2

```
┌─────────────────────────────────────────────┐
│   A decompiler 100 obtains first code         │ ⌇ S302
└─────────────────────────────────────────────┘
                     │
                     ▼
┌─────────────────────────────────────────────┐
│ The decompiler 100 relocates addresses of    │
│   variables associated with functions in      │ ⌇ S304
│      the first code,                          │
│ to obtain logical addresses of the variables  │
└─────────────────────────────────────────────┘
                     │
                     ▼
┌─────────────────────────────────────────────┐
│ The decompiler 100 performs decompilation     │
│ based on the logical addresses of the         │
│ variables and the first code, to obtain       │ ⌇ S306
│ second code applicable to a target            │
│ platform                                      │
└─────────────────────────────────────────────┘
```

FIG. 3

```
┌───────────────────────────────────────────────────┐
│  ┌─────────────────────────────────────────────┐   │
│  │           Code decompilation                 │   │
│  │                                              │   │
│  │  ┌───────┐  ┌──────────────┐  ┌─────────┐   │   │
│  │  │ Code  │  │              │  │ Browse  │───┼───┼──── 402
│  │  └───────┘  └──────────────┘  └─────────┘   │   │
│  │                                              │   │
│  │        ┌──────────────────┐                 │   │
│  │        │    Decompile     │─────────────────┼───┼──── 404
│  │        └──────────────────┘                 │   │
│  │                                              │   │
│  └─────────────────────────────────────────────┘   │
└───────────────────────────────────────────────────┘
```

FIG. 4

FIG. 5

(A)

(B)

(D)

(C)

FIG. 6

700

| 702 | 704 | 706 |
|-----|-----|-----|
| Communication module | Relocation module | Decompilation module |

FIG. 7

| Processor 202 | Communication interface 203 |
|---------------|------------------------------|

Bus 201

Program code

Computing apparatus 200

Memory 204

FIG. 8

**EP 4 209 896 B1**

**Patent documents cited in the description**

- US 2019227779 A1